# DEMANDE DE BREVET EUROPEEN

(11) **EP 1 454 661 A1**
(43) Date de publication de la demande: **08.09.2004**
(21) Numéro de dépôt: 04290485.4
(22) Date de dépôt: 23.02.2004
(51) Int. Cl.: A63B 69/04, G09B 9/04

(54) **Dispositif de simulation de conduite hippomobile**

(30) Priorité: 24.02.2003 FR 0302244
(71) Demandeur: Vennetier, Bruno, 45 160 Olivet (FR)
(72) Inventeur: Vennetier, Bruno, 45 160 Olivet (FR)

(57) **Abrégé**

La présente invention concerne un dispositif de simulation de conduite hippomobile, caractérisé en ce qu'il comprend au moins un guide (2, 3) relié à des moyens électroniques (16) et/ou mécaniques et/ou électromécaniques permettant la simulation des actions engendrées par au moins un mors d'un harnais lors de la conduite d'un attelage hippomobile en réponse à l'action du conducteur sur ledit au moins un guide (2, 3).

## Description

La présente invention concerne un dispositif de simulation de conduite d'une voiture hippomobile.

La conduite d'un attelage de chevaux exige essentiellement de la pratique acquise sur le terrain.

La partie théorique de la conduite bien qu'essentielle, doit toujours être adaptée en fonction de l'attelage.

Ainsi, une personne peu ou pas expérimentée aura de grandes difficultés à guider lui-même un attelage s'il n'a pas acquis l'expérience nécessaire.

De plus, elle devra toujours être accompagnée d'un moniteur qui lui montrera ce qu'elle doit faire.

Cet apprentissage est donc relativement long, onéreux et potentiellement dangereux si le conducteur n'arrive pas à contrôler ou à guider son attelage.

La présente invention est un outil technique complémentaire pour l'apprentissage, l'entretien et le perfectionnement à la conduite d'une voiture hippomobile grâce à un dispositif de simulation de conduite d'une voiture hippomobile utilisable seul, sans danger pour le conducteur et le cheval et d'un coût de revient faible.

La présente invention concerne un dispositif de simulation de conduite d'une voiture hippomobile comprenant au moins un guide relié à des moyens de simulation permettant la simulation des actions engendrées par au moins un mors d'un harnais lors de la conduite d'un attelage hippomobile, en réponse à l'action du conducteur sur ledit guide.

De manière avantageuse, les moyens de simulation sont constitués de moyens électroniques et/ou mécaniques et/ou électromécaniques.

Avantageusement, lesdits moyens de simulation sont constitués d'au moins un élément cylindrique d'axe (X-X) sur lequel sont situés des moyens de commande sénestres et dextres reliés audit guide et des moyens de mesure sénestres et dextres de la rotation, respectivement, desdits moyens de commande sénestres et dextres autour de l'axe (X-X).

Afin de permettre la transmission des ordres donnés par le guide, les moyens de commande sénestres sont reliés à une extrémité dudit au moins un guide et les moyens de commande dextres sont reliés à l'autre extrémité dudit au moins un guide.

De manière avantageuse, les moyens de commande sénestres (respectivement dextres) sont accolés aux moyens de mesure sénestres de la rotation (respectivement dextres).

Afin de connaître l'angle de rotation des moyens de commande, les moyens de mesure de la rotation sénestres et dextres sont reliés aux dits moyens électroniques.

Avantageusement, les moyens de commande sénestres et dextres sont constitués d'un ressort fixé sur l'élément cylindrique d'axe (X-X) et relié à une extrémité dudit au moins un guide, le ressort étant inclus dans un dévidoir sur et dans lequel est fixée l'extrémité dudit au moins un guide.

De manière alternative, le ressort présente une languette exerçant une force de tension sur l'extrémité dudit au moins un guide reliée au ressort.

De manière avantageuse, les moyens de mesure sénestres (respectivement dextres) sont aptes à mesurer la rotation du ressort des moyens de commande sénestres (respectivement dextres) autour dudit axe (X-X).

Afin d'obtenir une interface électronique entre l'utilisateur et les moyens mécaniques, les moyens électroniques sont constitués d'un boîtier électronique comportant un écran d'affichage permettant la visualisation des ordres du mouvement à effectuer par l'attelage et/ou la visualisation d'un parcours sur lequel le conducteur se déplace.

Afin de relier le guide aux moyens mécaniques, le boîtier électronique présente au moins un orifice dextre et un orifice sénestre placés sur un même axe horizontal, l'orifice dextre permettant le passage de ladite extrémité dudit au moins un guide reliée aux moyens de commande dextres et l'orifice sénestre permettant le passage de l'extrémité dudit au moins un guide relié aux moyens de commande sénestres.

Afin de simuler la conduite d'un attelage à plus d'un cheval, le dispositif comprend au moins un guide distal et un guide proximal respectivement associé à un élément cylindrique distal d'axe (X-X) et un élément cylindrique proximal d'axe (Y-Y), à des moyens de commandes distaux sénestres et dextres fixés sur ledit élément cylindrique distal et des moyens de commande proximaux sénestres et dextres fixés sur ledit élément cylindrique proximal, à des moyens de mesure de la rotation autour de l'axe (X-X) distaux sénestres et dextres et des moyens de mesure de la rotation autour de l'axe (Y-Y) proximaux sénestres et dextres, le boîtier électronique présentant au moins un orifice distal sénestre, un orifice distal dextre, un orifice proximal sénestre et un orifice proximal dextre.

Avantageusement, le dispositif présente des moyens de reconnaissance vocale et/ou des moyens de détection tactile, notamment pour la prise en compte de l'action du fouet, et/ou des moyens de détection et de détermination de la position du conducteur aptes à interagir avec lesdits moyens de commande et de mesure de la rotation.

La présente invention est maintenant décrite à l'aide d'exemples purement illustratifs et non limitatifs de l'invention, à l'aide des figures ci-jointes dans lesquelles :
- La figure 1 représente le dispositif selon l'invention de profil lors de son utilisation ;
- La figure 2 représente l'ensemble des moyens mécaniques du dispositif selon l'invention ;
- La figure 3 représente les moyens de commande du dispositif selon l'invention ;
- La figure 4 représente les moyens de mesure de la rotation des moyens de commande ;
- La figure 5 illustre une autre forme de réalisation possible des moyens de commande ;
- La figure 6 représente les différentes commandes de guidage visualisables sur l'écran d'affichage.

Le dispositif selon l'invention permet la simulation de la conduite d'au moins un cheval. Il est bien entendu que le dispositif s'applique à la simulation de la conduite d'un, de deux ou quatre chevaux, et aussi bien à la conduite d'un attelage en paire ou en tandem.

Le dispositif selon l'invention s'applique donc à la simulation de la conduite d'un nombre illimité de chevaux dans n'importe quelle configuration d'attelage.

La présente invention est décrite à partir d'un dispositif pour la simulation de la conduite d'un attelage de deux chevaux en tandem.

A la vue de la description suivante, il sera évident pour l'homme de l'art d'adapter ce dispositif à tout autre type d'attelage.

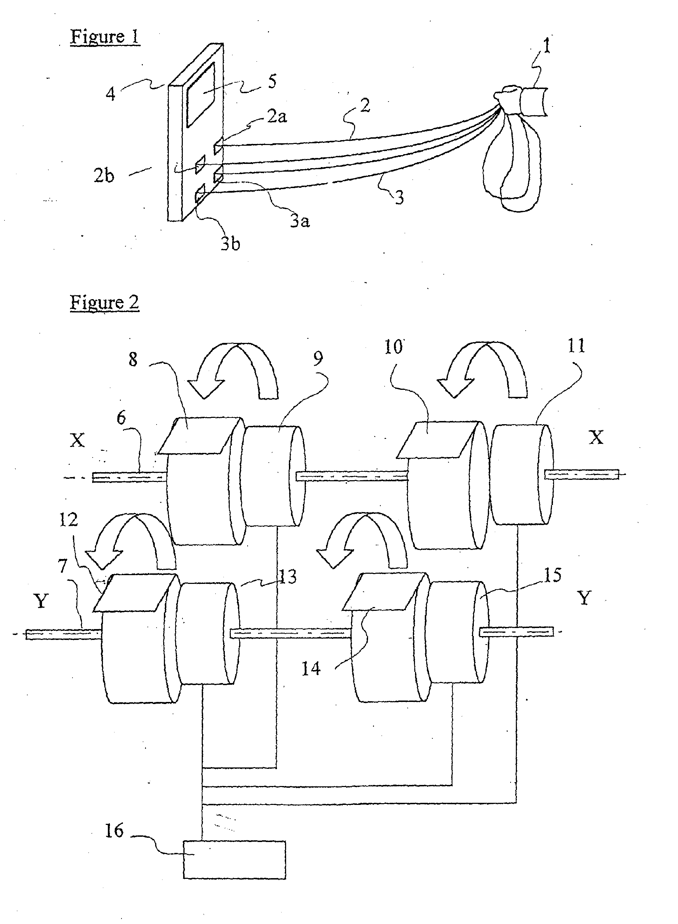

La figure 1 représente l'utilisateur 1 du dispositif selon l'invention tenant une paire de guides (2, 3), chacun de ces guides étant relié à un boîtier électronique 4 présentant un écran d'affichage 5 ainsi que deux paires d'orifices (2a, 2b) et (3a, 3b).

Les guides (2, 3) sont des bandes de matière représentant les rênes de l'attelage simulé. Avantageusement, elles sont en cuir.

Chaque extrémité du guide (2, 3) est relié à des moyens mécaniques ou électromécaniques (non représentés sur la figure 1) situés dans le boîtier électronique 4 en passant par un orifice (2a, 2b ; 3a, 3b).

Par mesure de commodité, les termes « dextre » et « senestre » sont employés pour désigner tout élément situé à la droite et à la gauche de l'utilisateur quand celui-ci tient les guides (2, 3), faisant ainsi face au boîtier électronique 4, c'est-à-dire lors des conditions d'utilisation du dispositif selon l'invention.

Le guide distal 2, c'est-à-dire le plus éloigné du plan du sol, est donc relié au boîtier électronique 4 en passant par un orifice distal dextre 2a et un orifice distal sénestre 2b placés tous deux sur un même axe horizontal et espacés d'une distance représentant sensiblement la longueur du mors du harnais devant être simulé.

Le guide proximal 3, c'est-à-dire le plus proche du plan du sol, est relié au boîtier électronique 4 en passant par un orifice proximal dextre 3a et un orifice proximal sénestre 3b, placés sur un même axe horizontal et espacés d'une distance représentant sensiblement la longueur du mors du harnais devant être simulé, chaque paire d'orifices (2a, 2b) et (3a, 3b) étant située l'une au-dessus de l'autre permettant ainsi la simulation d'un attelage en tandem, comme d'un attelage à quatre chevaux.

Il est évident pour l'homme de l'art que l'utilisateur du dispositif selon la figure 1 peut simuler aussi bien la conduite de deux chevaux attelés en tandem que la conduite de quatre chevaux attelés en utilisant le guide distal 2 et proximal 3.

Il est évident que l'utilisateur 1 du dispositif selon la figure 1 peut simuler la conduite d'un seul cheval (ou la conduite de deux chevaux attelés en paire) en utilisant indifféremment le guide distal 2 ou proximal 3.

L'écran d'affichage 5 est situé avantageusement au-dessus des paires d'orifices (2a, 2b) et (3a, 3b) au niveau des yeux du conducteur 1 quand celui-ci utilise le dispositif selon l'invention.

L'écran d'affichage 5 permet, par exemple, la visualisation des différents ordres donnés à l'attelage, comme cela sera expliqué ultérieurement, ou la visualisation d'un parcours hippique sur lequel le conducteur se déplace.

La figure 2 représente l'ensemble des moyens mécaniques du dispositif de la figure 1.

Les moyens mécaniques sont constitués d'un premier élément cylindrique 6 distal d'axe (X-X) et d'un second élément cylindrique 7 proximal d'axe (Y-Y).

Les éléments cylindriques (6, 7) sont fixés inamovibles dans le boîtier électronique 4 selon tout moyen connu par l'homme de l'art et ne peuvent ainsi effectuer de mouvement de rotation autour de leurs axes respectifs (X-X) et (Y-Y).

L'élément cylindrique distal 6 présente des moyens de commande distaux sénestres 8 (respectivement dextres 10) et des moyens de mesure distaux sénestres 9 (respectivement dextres 11) de la rotation des moyens de commande distaux sénestres 8 (respectivement dextres 10) autour de l'axe (X-X).

De même, l'élément cylindrique proximal 7 présente des moyens de commande proximaux sénestres 12 (respectivement dextres 14) et des moyens de mesure proximaux sénestres 13 (respectivement dextres 15) de la rotation des moyens de commande proximaux sénestres 12 (respectivement dextres 14) autour de l'axe (Y-Y).

L'extrémité du guide distal 2 passant par l'orifice distal dextre 2a (respectivement sénestre 2b) est reliée aux moyens de commande distaux dextres 10 (respectivement sénestres 8) situés sur l'élément cylindrique distal 6.

De même, l'extrémité du guide proximal 3 passant par l'orifice proximal dextre 3a (respectivement sénestre 3b) est reliée aux moyens de commande proximaux dextres 14 (respectivement sénestres 12) situés sur l'élément cylindrique proximal 7.

Les moyens de mesure distaux sénestres 9 se présentent sous la forme d'un galet accolé aux moyens de commande distaux sénestres 8 qui se présentent également sous la forme d'un galet.

Il en est de même pour les moyens de commande distaux dextres 10 avec les moyens de mesure distaux dextres 11, les moyens de commande proximaux sénestres 12 avec les moyens de mesure proximaux sénestres 13, et les moyens de commande proximaux dextres 14 avec les moyens de mesure proximaux dextres 15.

Les moyens de mesure (9, 11, 13, 15) sont reliés à des moyens électroniques 16 aptes à transcrire les rotations des moyens de commande (8, 10, 12, 14) en des signaux et des ordres visualisables sur l'écran d'affichage 5.

Les moyens électroniques 16 sont de tout type connu par l'homme de l'art.

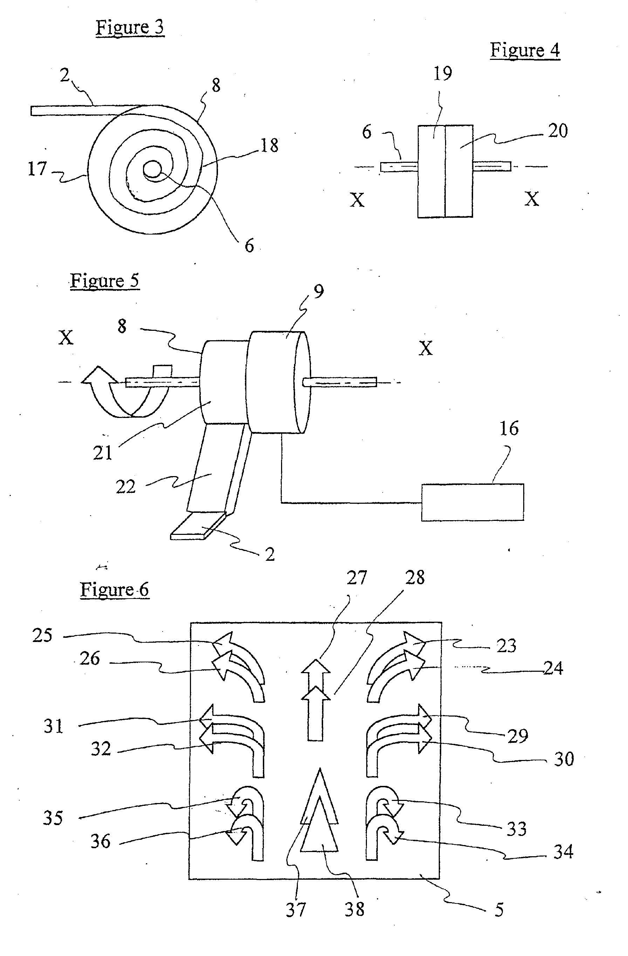

La figure 3 représente en coupe les moyens de commande distaux sénestres 8, les autres moyens de commande (10, 12, 14) étant identiques à ceux-ci.

Les moyens de commande distaux sénestres 8 se présentent sous la forme d'un dévidoir 17 de forme générale cylindrique d'axe (X-X) comprenant intérieurement un ressort 18 fixé sur l'élément cylindrique distal 6 d'axe (X-X).

L'extrémité du guide distal 2 passant par l'orifice distal sénestre 2b est fixé au ressort 18 selon tout moyen connu par l'homme de l'art.

Ainsi, tout effort exercé par le conducteur 1 sur le guide distal 2 entraîne une traction sur le ressort 18 et donc une rotation du ressort 18 et du dévidoir 17 autour de l'axe (X-X), c'est-à-dire autour de l'élément cylindrique distal 6.

Le ressort 18 dans le dévidoir 17 entraîne une contre-réaction à la traction exercée par le conducteur 1 qui revient dans sa position initiale s'il n'est soumis à aucune force.

Ainsi, le conducteur doit exercer une certaine traction sur ses guides (2, 3) pour entraîner une rotation du ressort 18 dans le dévidoir 17, rotation mesurée par les moyens de mesure 9.

La figure 4 représente les moyens de mesure distaux sénestres 9 de la rotation du dévidoir 17 autour de l'axe (X-X).

Les moyens de mesure 9 se présentent sous la forme d'un galet d'axe central (X-X) constitué d'une première partie, dite partie de mesure 19 et d'une seconde partie dite partie de référence 20 qui est fixée inamovible sur l'élément cylindrique distal 6.

Avantageusement, la partie de mesure 19 est fixée accolée sur les moyens de commande 8, soit sur le dévidoir 17 ; ainsi, toute rotation du ressort 18 et du dévidoir 17 autour de l'axe (X-X) entraîne une rotation de la partie de mesure 19 mais pas de la partie de référence 20.

La partie de référence 20 détermine alors l'angle de rotation de la partie de mesure 19 autour de l'axe (X-X) et par voie de conséquence, l'angle de rotation du dévidoir 17 autour de l'axe (X-X).

L'information sur l'angle angulaire ainsi mesuré est envoyée aux moyens électroniques 16 qui la traduit en des ordres et des signaux visualisables sur l'écran d'affichage 5.

La figure 5 illustre une autre représentation préférentielle des moyens mécaniques et plus précisément des moyens de commande sénestres distaux (8, 10), les mêmes éléments portent les mêmes numéros de référence.

Ainsi, selon la représentation de la figure 5, les moyens de commande sénestres distaux (8, 10) sont sous la forme d'un ressort 21 sur lequel est fixé une languette 22 venant prendre appui sur l'extrémité du guide 2 relié au ressort 21.

Toute traction du conducteur 1 sur le guide 2 se traduit par une force de traction et de poussée sur la languette 22 ce qui entraîne un mouvement de rotation du ressort 21.

Le ressort 21 tend à rester dans sa position initiale avec la languette 22 accolée sur l'extrémité du guide 2.

Ainsi, l'utilisateur 1 devra exercer une force de traction sur le guide 2 pour déplacer la languette 22 et par voie de conséquence le ressort 21.

Les moyens de mesure de la rotation 9 des moyens de commande 8, et plus précisément du ressort 21, sont du même type que ceux précédemment illustrés ou de tout type connu par l'homme de l'art.

La figure 6 représente les différents ordres du mouvement que le conducteur 1 peut donner à son attelage.

Le principe de fonctionnement du dispositif selon l'invention repose sur les tractions exercées par le conducteur 1 sur ses guides (2, 3) et, de manière plus précise, sur les différences de traction exercées sur les moyens de commande situées sur un même axe cylindrique (6, 7), et de manière plus précise sur les différences de rotation des moyens de commande distaux (8, 10) autour de l'élément cylindrique distal 6 d'axe (X-X) et/ou sur les différences de rotation des moyens de commande proximaux (12, 14) autour de l'élément cylindrique proximal 7 d'axe (Y-Y).

Le principe de fonctionnement est maintenant décrit à partir des moyens de commande (8, 10) situés sur l'élément cylindrique distal d'axe (X-X).

Les moyens de commande distaux (8, 10) couplés au guide distal 2 permettent la simulation des forces exercées sur le mors d'un harnais pour diriger un cheval.

Une force de traction exercée sur les moyens de commande distaux dextres 10 et senestres 8 de même intensité dite « tension nominale » signifie l'ordre d'une prise de contact avec le cheval.

il existe également une plage de sensibilité autour de la tension nominale plus ou moins importante pour permettre la simulation d'ordres plus ou moins précis.

Cette tension nominale et sa plage de sensibilité varient en fonction de l'étalonnage du dispositif selon l'invention et se traduit par une rotation nominale des moyens de commande (8,10, 12, 14), c'est-à-dire minimale pour signifier la prise de contact avec la bouche du cheval.

Ainsi, par rapport à une tension nominale donnée, la plage de sensibilité est plus ou moins grande selon que la bouche simulée est plus ou moins dure : une bouche dite « dure » est simulée à l'aide d'une grande plage de sensibilité de la tension nominale et une bouche dite « sensible » est simulée à l'aide d'une petite plage de sensibilité de la tension nominale.

Il existe ainsi une plage de tolérance avant que toute traction exercée sur les moyens de commande (8, 10, 12, 14) soit traduite par un ordre grâce aux moyens électroniques 16.

Pour simuler l'ordre d'arrêt au cheval, il faut que les forces de traction exercées sur les moyens de commande distaux dextres 10 et senestres 8 soient toutes deux égales et supérieures à la tension nominale.

Pour simuler l'ordre d'un changement de direction à gauche, il faut que la force de traction exercée sur les moyens de commande distaux sénestres 8 soit égale à la tension nominale et que la force de traction exercée sur les moyens de commande distaux dextres 10 soit inférieure à la tension nominale.

Pour simuler l'ordre d'un changement de direction à droite, il faut que la force de traction exercée sur les moyens de commande distaux dextres 10 soit égale à la tension nominale et que la force de traction exercée sur les moyens de commande distaux sénestres 8 soit inférieure à la tension nominale

Pour simuler l'ordre d'un doublement à gauche, il faut que la force de traction exercée sur les moyens de commande distaux sénestres 8 soit supérieure à la tension nominale et que la force de traction exercée sur les moyens de commande distaux dextres 8 soit inférieure à la tension nominale.

Pour simuler l'ordre d'un doublement à droite, il faut que la force de traction exercée sur les moyens de commande distaux sénestres 8 soit inférieure à la tension nominale et que la force de traction exercée sur les moyens de commande distaux dextres 10 soit supérieure à la tension nominale.

Pour simuler l'ordre d'un demi-tour à gauche, il faut que la force de traction exercée sur les moyens de commande distaux sénestres 8 soit fortement supérieure à la tension nominale et que la force de traction exercée sur les moyens de commande distaux dextres 10 soit inférieure à la tension nominal.

Ainsi, la simulation de l'ordre de doublement ou de demi-tour à gauche dépend de la force de traction exercée plus ou moins fortement par rapport à la tension nominale sur les moyens de commande distaux sénestres 10 tout en exerçant une force de traction inférieure à la tension nominale sur les moyens de commande distaux dextres 8.

Pour simuler l'ordre d'un demi-tour à droite, il faut que la force de traction exercée sur les moyens de commande distaux dextres 8 soit fortement supérieure à la tension nominale et que la force de traction exercée sur les moyens de commande distaux sénestres 10 soit inférieure à la tension nominal.

Des témoins de l'ordre simulé sont visualisables sur l'écran d'affichage 5 (figure 6).

Il est bien entendu que ce principe de fonctionnement s'applique aussi bien aux moyens de commande distaux (8, 10) que proximaux (12, 14).

L'écran d'affichage 5 présente pour chaque guide (2, 3) des témoins lumineux pour l'ordre changement de direction à droite (23, 24) et à gauche (25, 26), en avant (27, 28), doublement à droite (29, 30) et à gauche (31, 32), demi-tour à droite (33, 34) et à gauche (35, 36) et d'arrêt (37, 38).

Ces signaux sont doublés pour ainsi représenter l'ordre simulé à partir du guide proximal 3 et du guide distal 2.

Le jeu de témoins lumineux (23, 25, 27, 29, 31, 33, 35, 37) représente les ordres donnés par le guide proximal 3 et le jeu de témoin lumineux (24, 26, 28, 30, 32, 34, 36, 38) représente les ordres donnés par le guide distal 2.

Un seul jeu de témoin lumineux est en fonctionnement si on veut simuler la conduite d'un attelage en simple ou en paire.

Les deux jeux de témoins lumineux sont en fonctionnement si on veut simuler la conduite en tandem ou à quatre.

De manière avantageuse, le dispositif selon l'invention présente également des moyens de reconnaissance vocale aptes à interagir avec les moyens de commande (8, 10, 12, 14).

Ainsi, certains ordres concernant la vitesse de l'attelage, par exemple, sont signifiés vocalement par le conducteur 1 en plus d'une action sur le guide.

Des moyens de reconnaissance de la position du corps du conducteur, de types connus, sont également avantageusement présents.

Les paramètres sur la position du corps et la reconnaissance vocale interagissent avec les moyens électroniques 16 sous la forme de coefficients de pondération de la tension nominale et de la plage de sensibilité.

Des moyens de reconnaissance tactile, notamment par la présence d'un support capteur tactile de type connu en soi permet avantageusement de prendre en compte l'action d'un fouet.

Il est également prévu la présence de parcours types interactifs sur lesquels le conducteur peut s'entraîner avec des types d'attelages et de chevaux différents.

De manière alternative, ou supplémentaire, la présente invention comporte des moyens, électromécaniques aptes à interagir avec les moyens électroniques 16.

Les moyens électromécaniques sont du type connu en soi par l'homme de l'art. Il s'agit, par exemple, d'un élément du type actionneur à courant continu se substituant au ressort (18, 21).

Les moyens électromécaniques interagissent avec et sont intégrés dans les moyens de commande (8, 10, 12, 14) et/ou les moyens de mesure de la rotation (9, 11, 13, 15).

De manière avantageuse, les moyens électromécaniques permettent à l'utilisateur 1, par l'intermédiaire du boîtier électronique 4, d'intégrer des paramètres perturbateurs nouveaux et ainsi de simuler, par exemple, une bouche d'un cheval rétif, d'un cheval qui se défend.

## Revendications

1. Dispositif de simulation de conduite hippomobile comprenant au moins un guide (2, 3) relié à des moyens de simulation permettant la simulation des actions engendrées par au moins un mors d'un harnais lors de la conduite d'un attelage hippomobile en réponse à l'action du conducteur sur ledit au moins un guide (2, 3), lesdits moyens de simulation étant constitués de moyens électroniques (16) et/ou mécaniques et/ou électromécaniques, **caractérisé en ce que** lesdits moyens de simulation sont constitués d'au moins un élément cylindrique (6) d'axe (X-X) sur lequel sont situés des moyens de commande (8, 10) reliés audit guide (2) et des moyens de mesure (9, 11) de la rotation desdits moyens de commande (8, 10) autour de l'axe (X-X).

2. Dispositif selon la revendication 1, **caractérisé en ce que** lesdits moyens de commande (8, 10) sont constitués de moyens de commande sénestres (8) et dextres (10) reliés audit guide et **en ce que** lesdits moyens de mesure sont constitués de moyens de mesure sénestres (9) et dextres (11) de la rotation, respectivement, desdits moyens de commande sénestres (8) et dextres (10), lesdits moyens de commande sénestres (8) étant reliés à une extrémité dudit au moins un guide et les moyens de commande dextres (10) étant reliés à l'autre extrémité dudit au moins un guide (2).

3. Dispositif selon la revendication 2, **caractérisé en ce que** lesdits moyens de commande sénestres (8) (respectivement dextres (10)) sont accolés aux dits moyens de mesure sénestres (9) de la rotation (respectivement dextres (11)).

4. Dispositif selon la revendications 2 ou 3, **caractérisé en ce que** lesdits moyens de mesure de la rotation sénestres (9) et dextres (11) sont reliés aux dits moyens électroniques (16).

5. Dispositif selon l'une des revendications 2 à 4, **caractérisé en ce que** lesdits moyens de commande sénestres (8) et dextres (10) sont constitués d'un ressort (18, 21) fixé sur l'élément cylindrique (6) d'axe (X-X) et relié à une extrémité dudit au moins un guide (2).

6. Dispositif selon la revendication 5, **caractérisé en ce que** ledit ressort (18) est inclus dans un dévidoir (17) sur et dans lequel est fixée ladite extrémité dudit au moins un guide (2).

7. Dispositif selon la revendication 5, **caractérisé en ce que** ledit ressort (21) présente une languette (22) exerçant une force de tension sur ladite extrémité dudit au moins un guide (2) reliée audit ressort (21).

8. Dispositif selon l'une des revendications 5 à 7, **caractérisé en ce que** lesdits moyens de mesure sénestres (9) (respectivement dextres (11)) sont aptes à mesurer la rotation dudit ressort (18, 21) des moyens de commande sénestres (8) (respectivement dextres (10)) autour dudit axe (X-X).

9. Dispositif selon l'une des revendications précédentes, **caractérisé en ce que** lesdits moyens électroniques (16) sont constitués d'un boîtier électronique (4) comportant un écran d'affichage (5) permettant la visualisation des ordres du mouvement à effectuer par ledit attelage et/ou la visualisation d'un parcours sur lequel le conducteur (1) se déplace.

10. Dispositif selon la revendication 9, **caractérisé en ce que** ledit boîtier électronique (4) présente au moins un orifice dextre (2a) et un orifice sénestre (2b) placés sur un même axe horizontal, l'orifice dextre (2a) permettant le passage de ladite extrémité dudit au moins un guide (2) reliée aux moyens de commande dextres (10) et l'orifice sénestre (2b) permettant le passage de ladite extrémité dudit au moins un guide (2) relié aux moyens de commande sénestres (8).

11. Dispositif selon l'une des revendications précédentes, **caractérisé en ce qu'**il comprend, pour la simulation d'un attelage d'au moins deux chevaux, au moins un guide distal (2) et un guide proximal (3) respectivement associé à un élément cylindrique distal (6) d'axe (X-X) et un élément cylindrique proximal (7) d'axe (Y-Y), à des moyens de commandes distaux sénestres (8) et dextres (10) fixés sur ledit élément cylindrique distal (6) et des moyens de commande proximaux sénestres (12) et dextres (14) fixés sur ledit élément cylindrique proximal (7), à des moyens de mesure de la rotation autour de l'axe (X-X) distaux sénestres (9) et dextres (11) et des moyens de mesure de la rotation autour de l'axe (Y-Y) proximaux sénestres (13) et dextres (15), le boîtier électronique (4) présentant au moins un orifice distal sénestre (2b), un orifice distal dextre (2a), un orifice proximal sénestre (3b) et un orifice proximal dextre (3a).

12. Dispositif selon l'une des revendications précédentes, **caractérisé en ce qu'**il présente des moyens de reconnaissance vocale et/ou des moyens de détection et de détermination de la position du pilote et/ou des moyens de reconnaissance tactile aptes à interagir avec lesdits moyens de commande (8, 10, 12, 14) et de mesure de la rotation (9, 11, 13, 15).

13. Dispositif de simulation de conduite hippomobile comprenant au moins un guide (2, 3) relié à des moyens de simulation permettant la simulation des actions engendrées par au moins un mors d'un harnais lors de la conduite d'un attelage hippomobile en réponse à l'action du conducteur sur ledit au moins un guide (2, 3), lesdits moyens de simulation étant constitués de moyens électroniques (16) et/ou mécaniques et/ou électromécaniques, **caractérisé en ce que** lesdits moyens de simulation comprennent un actionneur à courant continu.
